(19) Europäisches Patentamt
European Patent Office
Office européen des brevets

(11) Veröffentlichungsnummer: **0 179 273**
**B1**

(12) # EUROPÄISCHE PATENTSCHRIFT

(45) Veröffentlichungstag der Patentschrift: **13.06.90**

(51) Int. Cl.[5]: **C 08 G 71/02,** C 08 G 12/46, C 09 D 5/00, C 09 D 175/00

(21) Anmeldenummer: **85111793.7**

(22) Anmeldetag: **18.09.85**

(54) **Verfahren zur Herstellung von Harnstoffkondensationsprodukten und deren Verwendung.**

(30) Priorität: **19.09.84 DE 3434318**

(43) Veröffentlichungstag der Anmeldung:
**30.04.86 Patentblatt 86/18**

(45) Bekanntmachung des Hinweises auf die Patenterteilung:
**13.06.90 Patentblatt 90/24**

(84) Benannte Vertragsstaaten:
**AT BE CH DE FR GB IT LI NL SE**

(56) Entgegenhaltungen:
**EP-A-0 123 879**
**FR-A- 894 764**
**US-A-2 653 144**

(73) Patentinhaber: **BASF Lacke + Farben Aktiengesellschaft**
**Max-Winkelmann-Strasse 80**
**D-4400 Münster (DE)**

(72) Erfinder: **Osterloh, Rolf, Dr.**
**Am Wehrhaus 16 a**
**D-6718 Gruenstadt (DE)**
Erfinder: **Schupp, Eberhard, Dr.**
**Tilsiter Weg 4**
**D-6830 Schwetzingen (DE)**
Erfinder: **Loch, Werner, Dr.**
**In der Bleiche 2**
**D-6701 Erpolzheim (DE)**
Erfinder: **Ahlers, Klaas, Dr.**
**Foehrenweg 21**
**D-4400 Muenster (DE)**

(74) Vertreter: **Mutzbauer, Helmut, Dr. et al**
**Carl-Bosch-Strasse 38**
**D-6700 Ludwigshafen (DE)**

**EP 0 179 273 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung von Harnstoffkondensationsprodukten aus primären Polyaminen, Harnstoff, sekundären Aminen und Polyalkoholen, die mindestens zwei primäre oder sekundäre Hydroxylgruppen und zumindest teilweise weitere Gruppierungen enthalten, und ihre Verwendung als Bindemittelkomponente in hitzehärtbaren Lacken.

Die Herstellung copolymerer Polyharnstoffe aus Diaminen und Harnstoff war bereits bekannt (vgl. R. Pasedag, Tagung der GDCh-Fachgruppe Makromolekulare Chemie in Bad Nauheim, 1966). Dabei wurden jedoch Produkte erhalten, die zwar für Spritzguß und Blasverfahren anwendbar, wegen ihrer schlechten Löslichkeit aber nicht für Lacke geeignet waren.

In der EP—A—01 23 879 wurde zwar bereits ein Verfahren zur Herstellung von Harnstoffkondensationsprodukten vorgeschlagen, die sich in Lackbindemittel für hitzehärtbare Lacke einsetzen lassen, bei dem man (A) mindestens ein primäres Di- und/oder Polyamin mit (B) Harnstoff, (C) mindestens einem sekundären Amin und gegebenenfalls (D) einem oder mehreren Polyalkoholen bei erhöhter Temperatur umsetzt und den entstehenden Ammoniak abtrennt. Dieses Verfahren erwies sich jedoch insofern als schwierig handhabbar, als zu Beginn der Kondensation in kurzer Zeit erhebliche Mengen Ammoniak abdestilliert werden mußten. Außerdem genügten die dabei erhaltenen Kondensationsprodukte noch nicht voll hinsichtlich ihrer lacktechnischen Eigenschaften, wie Verlauf und Schichtdickensteuerung bei ihrer Verwendung als Bindemittelkomponente in wäßrigen bzw. wasserverdünnbaren Lacken.

Aufgabe der vorliegenden Erfindung ist es, ein Verfahren zur Herstellung von Harnstoffkondensationsprodukten aufzuzeigen, die als Lackbindemittelkomponenten verbesserte hitzehärtbare Lacke ergeben. Diese Aufgabe läßt sich überaschenderweise durch die Mitverwendung spezieller Polyole bei der Harnstoffkondensation lösen.

Gegenstand der vorliegenden Erfindung ist ein Verfahren zur Herstellung von Harnstoffkondensationsprodukten, das dadurch gekennzeichnet ist, daß man

(A) mindestens ein primäres Di- und/oder Polyamin mit

(B) Harnstoff,

(C) mindestens einem sekundären Monoamin und

(D) einem oder mehreren Polyalkoholen, die mindestens zwei primäre oder sekundäre Hydroxylgruppen sowie zusätzlich mindestens eine Ether- oder Thioethergruppe oder eine tertiäre Aminogruppe

—N—
|
R

oder die Gruppierung

—NH—C—
‖
O

enthalten, wobei R für einen Alkylrest mit 1 bis 12 Kohlenstoffatomen, einen Cycloalkyl- oder, gegebenenfalls substituierten, Phenylrest mit 6 bis 20 Kohlenstoffatomen, einen Hydroxyalkylrest mit 2 bis 12 Kohlenstoffatomen oder einen Hydroxyalkylrest, wie er durch Addition einer Epoxidverbindung an ein sekundäres Amin erhalten wird, steht, und (D) gegebenenfalls teilweise ersetzt sein kann durch

(E) einen oder mehrere von (D) verschiedene Polyalkohole, die mindestens zwei primäre oder sekundäre Hydroxylgruppen enthalten,

bei erhöhter Temperatur, gegebenenfalls in Gegenwart von Katalysatoren, umsetzt und den entstehenden Ammoniak abtrennt.

Gegenstand der vorliegenden Erfindung sind auch Harnstoffkondensationsprodukte, die nach dem erfindungsgemäß Verfahren erhältlich sind.

Gegenstand der Erfindung ist außerdem die Verwendung der erfindungsgemäß hergestellten Harnstoffkondensationsprodukte als Bindemittelkomponente in hitzehärtbaren Lacken, für die Pulverlackierung sowie insbesondere auch in kathodischen Elektrotauchlacken.

Nach dem erfindungsgemäßen Verfahren lassen sich auf einfache Weise Harnstoffkondensationsprodukte herstellen, die sich sehr vorteilhaft als Bindemittelkomponenten in hitzehärtbaren Lacken verwenden lassen. Als Zusatz zu selbstvernetzenden Bindemitteln bewirken die erfindungsgemäßen Harnstoffkondensationsprodukte eine größere Härte und Elastizität des Filmes, bei nicht selbstvernetzenden Bindemitteln können die erfindungsgemäßen Harnstoffkondensationsprodukte außerdem die Funktion eines hochwirksamen Vernetzers übernehmen, der oberhalb von etwa 130°C zu harten, vernetzten Filmen führt.

Zu den für das erfindungsgemäße Herstellungsverfahren zu verwendenden Aufbaukomponenten ist im einzelnen folgendes zu sagen:

(A) Als primäres Di- und/oder Polyamin (A) kommen prinzipiell alle aliphatischen, cycloaliphatischen und aromatischen Polyamine in Frage, die mindestens zwei primäre Aminogruppen enthalten. Nichtcyclische aliphatische Amine mit weniger als 4 Kohlenstoffatomen zwischen den primären Aminogruppen

und cycloaliphatische oder aromatische Amine, deren primäre Aminogruppen durch weniger als 3 Kohlenstoffatome voneinander getrennt sind, sind weniger bevorzugt, da sich aus diesen Aminen und Harnstoffen cyclische Harnstoffe bilden. Die primären Di- und/oder Polyamine können neben den primären Aminogruppen noch weitere funktionelle Gruppen, wie z.B. sekundäre oder tertiäre Aminogruppen, Hydroxylgruppen oder Ethergruppen, enthalten. Beispiele geeigneter Amine sind 1,4-Diaminobutan, 1,6-Diaminohexan, Heptamethylendiamin, Oktamethylendiamin, Nonamethylendiamin, Dekamethylendiamin, Dodekamethylendiamin oder verzweigte aliphatische primäre Diamine, wie z.B. das Isomerengemisch aus 9- und 10-Aminostearylamin oder aus 9- und 10-Aminomethylstearylamin, 4,9-Dioxadodecandiamin-1,12, 2-Methylpentandiamin-1,5, 4,4'-Diaminodicyclohexylmethan, 3,3'-Dimethyl-4,4'-diaminodicyclohexylmethan, 4,4'-Diaminodiphenylmethan, Toluylendiamin, Tris-(amino-ethyl)-amin und Tris-(aminopropoxyethyl)-amin.

Neben derartigen Polyaminen mit niedrigem, definiertem Molekulargewicht sind als Komponente (A) auch oligomere oder polymere Polyamine mit Molekulargewichten bis zu 3000 einsetzbar. Beispiele solcher Polyamine sind Diamine, die durch reduktive Cyanethylierung von Polyolen wie Polytetrahydrofuran herstellbar sind. Derartige Produkte enthalten endständige primäre Aminogruppen in Form von Aminopropoxygruppen.

Die oben beschreibenen Amine können für sich allein oder im Gemisch miteinander eingesetzt werden.

(B) Komponente (B) ist Harnstoff.

(C) Als sekundäre Amine (C) können im Prinzip beliebige sekundäre Amine eingesetzt werden. Bevorzugt werden solche, die einen Siedepunkt von weniger als 250°C besitzen, besonders bevorzugt sind solche mit einem Siedepunkt von 100 bis 200°C. Beispiele von besonders bevorzugten Aminen sind Di-n-propylamin, Di-iso-propylamin, Di-n-butylamin, Di-sek-butylamin, Di-iso-butylamin und Di-n-hexylamin.

(D) Als Polyalkohole (D), die mindestens zwei primäre oder sekundäre Hydroxylgruppen enthalten, kommen solche in Frage, die zusätzlich mindestens eine Ether- oder Thioethergruppe oder eine tertiäre Aminogruppe

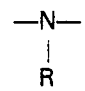

oder die Gruppierung

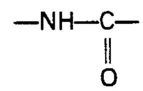

enthalten, wobei R für einen Alkylrest mit 1 bis 12 Kohlenstoffatomen, einen Cycloalkyl- oder gegebenenfalls substituierten Phenylrest mit 6 bis 20 Kohlenstoffatomen, einen Hydroxyalkylrest mit 2 bis 12 Kohlenstoffatomen oder einen Hydroxyalkylrest, wie er durch Addition einer Epoxidverbindung an ein sekundäres Amin erhalten wird, steht.

Als Polyalkohole (D), die Ethergruppen —O— enthalten, kommen beispielsweise Verbindungen des Typs $R^1—O—R^2$ oder $R^1—(O—CH_2—CH_2)_n—O—R^2$ in Frage, wobei $R^1$ und $R^2$ untereinander gleich oder verschieden sind und für Hydroxyalkylreste mit 2 bis 14 Kohlenstoffatomen stehen, und $n = 1$ bis 20 ist. Derartige geeignete Verbindungen sind z.B. Diglykol, Triglykol, ferner Ethoxilierungsprodukte mehrwertiger Alkohole, wie Ethoxilierungsprodukte von Trimethylolpropan, Pentaerythrit, Sucrose, Trishydroxiethylisocyanurat oder von Diolen, wie Neopentylglykol, Hexandiol, Butandiol, Polytetrahydrofuran (MG-Bereich 400 bis 2000) sowie Ethoxilierungsprodukte von Diphenolen.

Als Polyalkohole (D), die Thioethergruppen —S— enthalten, kommen beispielswiese Verbindungen des Typs $R^1—S—R^2$ oder $R^1—S—(CH_2—CH_2—O)_n—R^2$ in Betracht, wobei $R^1$ und $R^2$ untereinander gleich oder verschieden sind und für Hydroxyalkylreste mit 2 bis 14 Kohlenstoffatomen stehen, und $n = 1$ bis 5 ist. Eine derartige geeignete Verbindung ist beispielsweise Thiodiglykol.

Als Polyalkohole (D), die tertiäre Aminogruppen

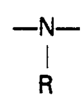

enthalten, kommen beispielsweise Verbindungen des Typs

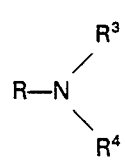

in Frage, wobei $R^3$ und $R^4$ untereinander gleich oder verschieden sind und für Hydroxyalkylreste mit 2 bis 20 Kohlenstoffatomen stehen und R für einen Alkylrest mit 1 bis 12 Kohlenstoffatomen, einen Hydroxyalkylrest mit 2 bis 12 Kohlenstoffatomen, einen Cycloalkylrest mit 6 bis 20, vorzugsweise 6 bis 17 Kohlenstoffatomen, einen Phenylrest, einen substituierten, vorzugsweise alkylsubstituierten Phenylrest mit 7 bis 20, vorzugsweise 7 bis 17 Kohlenstoffatomen oder einen Hydroxyalkylrest, wie er durch Addition einer Epoxidverbindung an ein sekundäres Amin, insbesondere ein sekundäres Dialkanolamin oder durch Addition einer mehrfunktionellen Epoxidverbindung an ein sekundäres Monoalkanolamin erhalten wird, steht.

Beispiele für geeignete Verbindungen (D) mit tertiären Aminogruppen sind

Alkoxilierungsprodukte primärer Monoamine, wie z.B. Methyldiethanolamin, Methyldipropanolamin, Isobutyldiethanolamin, Stearyldiethanolamin, Cyclohexyldiethanolamin, Phenyldiethanolamin, Benzyldiethanolamin oder 2-Methoxydiethanolamin und 3-Ethoxipropyldiethanolamin; Alkoxilierungsprodukte des Ammoniaks, wie z.B. Triethanolamin, Tripropanolamin, bzw. deren Umsetzungsprodukte mit Ethylenoxid oder Glycidol;

ebenso geeignet sind Alkylolierungsprodukte von Diaminen, wie z.B. von Ethylendiamin, Propylendiamin, Neopentyldiamin, Hexamethylendiamin, 4,9-Dioxadodecan-1,12-diamin, Bis-(3-aminopropyl)polytetrahydrofuran (MG ca. 750.) oder anderen bereits unter (A) aufgeführten Diaminen;

geeignet sind ferner Alkoxilierungsprodukte primär/sekundärer, primär/tertiärer oder disekundärer Amine, wie z.B. 3-Amino-1-methylaminopropan, 2-Diethylaminoethylamin, Dimethylaminopropylamin, Diethylentriamin und Piperazin;

ebenso geeignet als Komponente (D) sind Umsetzungsprodukte aus Alkanolamin, wie z.B. Diethanolamin, Methylethanolamin oder Dipropanolamin mit aliphatischen, cycloaliphatischen oder von Diphenolen abgeleiteten Diepoxiden, wie z.B. Butandioldiglycidylether, Bisphenol-A-diglycidylether bzw. davon abgeleitete homologe Diglycidylether;

auch Umsetzungsprodukte der oben genannten Alkanolamine mit Glycidol sind als Komponente (D) geeignet.

Als Polyalkohole (D), die Carbonamidgruppen

$$-NH-\underset{\overset{\|}{O}}{C}-$$

enthalten, eignen sich beispielsweise Verbindungen des Typs

$$R^5-NH-\underset{\overset{\|}{O}}{C}-R^6-\underset{\overset{\|}{O}}{C}-NH-R^5$$

wobei $R^5$ für Hydroxialkylreste mit 2 bis 6 Kohlenstoffatomen und $R^6$ für einen zweiwertigen Rest, insbesondere einen Alkylenrest mit 3 bis 36, vorzugsweise 4 bis 12 Kohlenstoffatomen steht. Beispiele hierfür sind Umsetzungsprodukte von Dicarbonsäuren, die 3 bis 36 Kohlenstoffatome enthalten, wie z.B. Dimethylmalonsäure, Malonsäure, Adipinsäure oder Dimerfettsäure mit Ethanolamin oder Propanolamin.

Bevorzugte Polyalkohole (D) sind solche mit Molekulargewichten von 106 bis 5000 und 2 bis 10 Hydroxylgruppen.

Komponente (D) kann gegebenenfalls teilweise, etwa zu 10 bis 50 Gew.%, durch einen oder mehrere Polyalkohole (E), die keine —O—; —S—;

$$-\underset{\overset{\vdots}{R}}{N}-$$

und

$$-NH-\underset{\overset{\|}{O}}{C}\text{-Gruppen}$$

enthalten, ersetzt sein.

Diese Polyalkohole (E) enthalten mindestens zwei primäre oder sekundäre Hydroxylgruppen. Beispiele für Polyalkohole (E) sind Ethylenglykol, Propylenglykol-1,3, Butandiol, Neopentylglykol, Hexandiol und Hydroxipivalinsäureneopentylglykolester.

Polyalkohole (E) mit mehr als 2 Hydroxylgruppen können zur Erhöhung der Funktionalität der erfindungsgemäßen Harnstoffkondensationsprodukte verwendet werden. Die Mitverwendung mancher Polyole bei der Herstellung erfindungsgemäßer Bindemittelkomponenten, die für die kathodische Elektrotauchlackierung eingesetzt werden, kann sogar zu besserer Spannungsfestigkeit und besserem Umgriff der Elektrotauchlacke führen. Beispiele derartiger verwendbarer Polyalkohole sind Trimethylolpropan, Trishydroxyethylisocyanurat und Pentaerythrit.

Zur erfindungsgemäßen Herstellung der Harnstoffkondensationsprodukte werden die Komponenten (A), (B), (C), (D) und gegebenenfalls (E) miteinander bei erhöhter Temperatur umgesetzt, z.B. indem man sie zusammen allmählich auf 140 bis 230°C, vorzugsweise 150 bis 210°C erhitzt.

Es ist nicht nötig, alle Komponenten (A) bis (D) bzw. (A) bis (E) gleichzeitig einzusetzen, es kann z.B. auch zuerst der Harnstoff (B) und das primäre Di- und/oder Polyamin (A) bei 110 bis 150°C zur Reaktion gebracht werden und anschließend dann das sekundäre Amin (C) entweder auf einmal oder dem fortschreitenden Umsatz entsprechend allmählich zugegeben werden, wobei zweckmäßigerweise eine Temperatur von 140 bis 230°C eingehalten wird. Die allmähliche Zugabe bietet sich in den Fällen an, in denen ein sekundäres Amin mit relativ niedrigem Siedepunkt eingesetzt wird und das Verfahren nicht unter Druck durchgeführt wird. Nach beendeter Zugabe läßt man im allgemeinen noch 1 bis 20 Stunden nachreagieren.

Die Polyalkohole (D) und gegebenenfalls (E) können zusammen mit den Aminen dem Harnstoff zugesetzt werden, es ist jedoch auch möglich, zuerst nur die Komponenten (A) bis (C) zur Reaktion zu bringen und anschließend mit dem Polyalkohol (D) und gegebenenfalls (E) umzusetzen.

Besonders vorteilhaft läßt sich die Reaktion jedoch steuern, wenn nur die Komponenten (B), (C) und gegebenenfalls (E) vorgelegt werden und auf 130 bis 180°C erhitzt werden und erst dann die Komponente (A) über einen Zeitraum von bis zu 5 Stunden, vorzugsweise in 0,1 bis 3 Stunden (in Abhängigkeit von der Größe des Ansatzes) zudosiert wird. Nach Beendigung der Zugabe der Komponente (A) kann in einem weiteren Schritt die Komponente (D) zugesetzt werden. Die Umsetzung und die Zugabe der Komponenten (A) und (D) kann unter Druck, z.B. von 0,1 bis 20 bar erfolgen.

Bei der Umsetzung ist es im allgemeinen nicht notwendig, einen Katalysator zu verwenden, doch können zusätzlich Katalysatoren wie basische Katalysatoren, z.B. Natriummethylat oder saure Katalysatoren, wie p-Toluolsulfonsäure oder β-Naphthalinsulfonsäure, Schwermetallsalze, vorzugsweise Cu-I-Salze, wie Kupfer-I-chlorid oder Cu-I-bromid oder auch Zinnsalze bevorzugt mit organischen Resten wie z.B. Dibutylzinndilaurat in Mengen bis zu 3 Gew.%, bezogen auf die Gesamtmenge der Komponenten (A) bis (D) bzw. (A) bis (E), eingesetzt werden.

Die Mengenverhältnisse, in denen die einzelnen Komponenten (A) bis (E) eingesetzt werden, sind nicht kritisch. Man wird im allgemeinen innerhalb eines Äquivalentverhältnisses von $NH_2$-Gruppen der primären Di- und/oder Polyamine (A) zu $NH_2$-Gruppen des Harnstoffs (B) zu NH-Gruppen des sekundären Monoamins (C) zu OH-Gruppen des Polyalkohols (D) bzw. (D+E) von 1:1,2 bis 2,4:0,2 bis 20:0,1 bis 0,9:0 bis 0,5 arbeiten bzw. pro Mol Harnstoff (B) etwa 2 Äquivalente der Summe aus (A), (C) und (D) bzw. (D+E) verwenden. Um die Reaktion zu beschleunigen, kann auch ein Überschuß an (C) eingesetzt werden, der am Ende der Reaktion wieder entfernt wird.

Die Herstellung der Harnstoffkondensationsprodukte kann in inerten Lösemitteln, wie höhersiedenden Kohlenwasserstoffen oder Ethern durchgeführt werden. Beispiele geeigneter Lösemittel sind Toluol, Xylol und Kohlenwasserstofffraktionen mit einem Siedebereich von 120 bis 200°C bzw. als Ether 5,8-Dioxadodecan. Die Reaktion kann aber auch ohne Lösemittel durchgeführt werden.

Die erfindungsgemäß hergestellten Harnstoffkondensationsprodukte eignen sich hervorragend als Bindemittelkomponente in hitzehärtbaren Lacken. Werden sie zu selbstvernetzenden Bindemitteln zugesetzt, so bewirken sie eine größere Härte und Elastizität der eingebrannten Lackfilme und verbessern Metallhaftung und Korrosionsschutz, bei nicht selbstvernetzenden Bindemitteln können die erfindungsgemäßen Harnstoffkondensationsprodukte außerdem die Funktion eines hochwirksamen Vernetzers übernehmen, der oberhalb von etwa 130°C zu harten, vernetzten Filmen führt.

Als selbstvernetzende Bindemittel bzw. nicht selbstvernetzende Bindemittel, die mit den erfindungsgemäßen Harnstoffkondensationsprodukten kombiniert werden können, kommen die in der Lackchemie üblichen Bindemittel in Frage. Geeignet sind vor allem Polyadditions-, Polykondensations- oder Polymerisationsprodukte mit einem mittleren Molekulargewicht $\overline{M}_n$ von 500 bis 10 000, die aus den verschiedensten Verbindungsklassen ausgewählt sein können. Wichtig ist allein, daß sie im Mittel mindestens zwei OH- und/oder primäre und/oder sekundäre Amino-Gruppen besitzen. Bevorzugt soll die Komponente einen harzartigen Charakter haben. Beispiele geeigneter Materialien sind Polyester, Alkydharze, Polyether, Polyacrylatharze, Polyurethane, Epoxidharze und ihre Umsetzungsprodukte mit Alkoholen, Mercaptanen oder Aminen. Eine weitere geeignete Verbindungsklasse sind Polydienharze oder -öle, z.B. Polybutadienöle. In diese lassen sich z.B. durch Addition von Mercaptoethanol an einen Teil der Doppelbindungen OH-Gruppen einführen. Eine weitere Möglichkeit, OH-Gruppen einzuführen, ist die Umsetzung mit Maleinsäureanhydrid und nachfolgende Reaktion mit OH-haltigen Aminen wie Ethanolamin oder Diethanolamin. Auch durch Epoxidierung der Polybutadienöle mit Persäuren und anschließende Umsetzung mit Aminen läßt sich die benötigte Derivatisierung durchführen.

Geeignete Polyester sind solche mit einem mittleren Molekulargewicht $\overline{M}_n$ von 500 bis 10 000 und einer Hydroxylzahl von 25 bis 400 aus aliphatischen und/oder aromatischen Dicarbonsäuren mit 4 bis 10 Kohlenstoffatomen, beispielsweise Bernsteinsäure, Glutarsäure, Adipinsäure, Pimelinsäure, Korksäure, Azelainsäure, Sebacinsäure, Cyclohexandicarbonsäure, Phthalsäure, Isophthalsäure oder Terephthalsäure bzw. deren Derivaten und mehrwertigen Alkoholen, wie aliphatischen Diolen, wie Ethylenglykol, Diethylenglykol, Triethylenglykol, Polyethylenglykol, Propandiol, Butandiol, Hexandiol, Neopentylglykol oder Hydroxypivalinsäureneopentylglykolester und gegebenenfalls höherwertige Alkohole, wie Trimethylolpropan, Glycerin, Erythrit, Pentaerythrit, Trimethylolbenzol oder Trishydroxyethylisocyanurat.

Geeignete Alkydharze sind ähnlich aufgebaut, nur enthalten sie zusätzlich eine oder mehrere Monocarbonsäuren wie z.B. Fettsäuren. Auch Alkydharze, welche Glycidylester von verzweigten Carbonsäuren enthalten, können verwendet werden.

Geeignete Polyether sind z.B. aliphatische oder araliphatische Polyether, welche durch Umsetzung von zwei- und/oder mehrwertigen Alkoholen, mit verschiedenen Mengen an Ethylen- und/oder Propylenoxid erhalten werden.

Geeignete Polyacrylate sind OH-gruppenhaltige Polyacrylate mit einer Hydroxylzahl von 25 bis 500. Diese sollten eine Säurezahl <25, bevorzugt <10 und einen K-Wert nach Fikentscher (3% ig in Aceton) von 10 bis 40, vorzugsweise von 12 bis 25 aufweisen und können z.B. folgende Monomeren einpolymerisiert enthalten:

10 bis 100 Gew.%, vorzugsweise 20 bis 40 Gew.% mindestens eines OH- oder NH-Gruppen enthaltenden Monomeren, beispielsweise Isopropylaminopropylmethacrylamid oder Hydroxy-($C_2$—$C_4$)-alkylester einer α,β-ethylenisch ungesättigten Carbonsäure, beispielsweise 2-Hydroxyethyl- und Hydroxypropyl(meth)acrylat sowie Butandiol-mono(meth)acrylat, 0 bis 90 Gew.%, vorzugsweise 60 bis 80 Gew.%, mindestens einer ethylenisch ungesättigten Carboxyl- und Hydroxylgruppenfreien Verbindung, beispielsweise Vinylaromaten, wie Styrol und Vinyltoluol, Vinylester von Carbonsäuren mit 2 bis 18 Kohlenstoffatomen, wie Vinylacetat und Vinylpropionat, Vinylether von Monoalkanolen mit 1 bis 18 Kohlenstoffen, wie Vinylmethylether und Vinylisobutylether, Ester der Acrylsäure oder Methacrylsäure mit $C_1$—$C_{12}$-Monoalkanolen, entsprechende Maleinsäure-, Fumarsäure- und Itaconsäurediester, (Meth-)acrylsäureamid, (Meth-)acrylsäurenitril, Monomere mit tertiären Aminogruppen wie Diethylaminoethylacrylat oder Diethylaminoethylacrylamid sowie Gemische dieser Monomeren. Eine weitere Möglichkeit, basische Acrylate zu erhalten, ist der Einsatz von Epoxidgruppen tragenden Monomeren wie Glycidylmethacrylat und Addition von Aminen an die Oxiranringe der Polymerisate.

Geeignete Polyurethane sind:

OH-gruppenhaltige Polyurethane mit einer Hydroxylzahl von 25 bis 600 aus aliphatischen und/oder aromatischen Diisocyanaten, die beispielsweise aus Tetramethylendiisocyanat, Hexamethylendiisocyanat, Isophorondiisocyanat, Diphenylmethandiisocyanat, Toluylendiisocyanat, Naphthylendiisocyanat, 4,4'-Diphenyletherdiisocyanat, sowie gegebenenfalls daraus hervorgehende Di- oder Trimere, und aliphatischen Diolen, wie Ethylenglykol, Diethylenglykol, Triethylenglykol, Polyethylenglykolen, Propandiol, Butandiol, Hexandiol, Neopentylglykol oder Hydroxypivalinsäurenepentylglykolester und gegebenenfalls höherwertigen Alkoholen, wie Trimethylolpropan, Glycerin, Pentaerythrit, Trimethylolbenzol oder Trishydroxyethylisocyanurat erhältlich sind.

Geeignete Epoxidharze sind z.B. Glycidylether, wie sie aus 2,2-Bis-(4-hydroxyphenyl)-propan und Epichlorhydrin hergestellt werden. Diese Epoxidharze können weiter modifiziert sein, z.B. durch Umsetzung mit polyfunktionellen Alkoholen oder SH-Verbindungen. Beispiele solcher, für die Modifizierung geeigneter polyfunktioneller Alkohole sind Ethylenglykol, Propylenglykol-1,2, Propylenglykol-1,3 und Butandiol-1,4.

Ist eine Elastifizierung erwünscht, können auch noch langkettige polyfunktionelle Alkohole oder Mercaptane eingesetzt werden. Werden die polyfunktionellen Alkohole oder Mercaptane in größeren als äquivalenten Mengen in Bezug auf die vorhandenen Epoxidgruppen eingesetzt, so entstehen Produkte mit endständigen OH- oder SH-Gruppen. Setzt man dagegen geringere als äquivalente Mengen ein, so entstehen Produkte mit endständigen Epoxidgruppen, die gegebenenfalls weiter umgesetzt werden können. Während die Umsetzung der Mercaptane mit Epoxidgruppen bereits ohne Katalysator abläuft, ist für die Umsetzung der Alkohole die Verwendung eines Katalysators wie z.B. Dimethylbenzylamin und höherer Temperaturen von etwa 50 bis 150°C notwendig.

Die erfindungsgemäßen Harnstoffkondensationsprodukte können mit üblichen selbstvernetzenden Bindemitteln in solchen Mengen kombiniert werden, daß diese Bindemittelkombinationen 2 bis 50, vorzugsweise 10 bis 40 Gew.% des erfindungsgemäßen Harnstoffkondensationsproduktes und 50 bis 95, vorzugsweise 60 bis 90 Gew.% des anderen selbstvernetzenden Bindemittels enthalten.

Die Mengenverhältnisse bei Kombinationen mit nicht vernetzenden Bindemitteln sind 10 bis 60, vorzugsweise 20 bis 40 Gew.% Harnstoffkondensationsprodukt und 40 bis 90, vorzugsweise 60 bis 80 Gew.% nicht vernetzendes Bindemittel.

Die erfindungsgemäßen Bindemittel können, gegebenenfalls mit Zusätzen wie Pigmenten, Hilfsmitteln und Härtungskatalysatoren, durch übliche Methoden wie Spritzen, Tauchen, Streichen, Gießen und Rakeln auf Substanzen wie Holz, Kunststoff oder Metall aufgebracht werden.

Fur die Herstellung von Pulverlacken werden jeweils feste, lösungsmittelfreie Kombinationen der erfindungsgemäßen Harnstoffkondensationsprodukte mit anderen Bindemitteln, deren Erweichungspunkte aus Gründen der Blockfestigkeit jeweils >60°C liegen sollten, trocken gemahlen und mit üblichen Zusätzen, wie Pigmenten, Füllstoffen und Verlaufshilfsmitteln, beispielsweise auf Polyacrylatbasis, vermischt. Die Mischungen werden anschließend bei Temperaturen um 100°C schmelzhomogenisiert (z.B. in einem Extruder). Nach Abkühlen der Extrudate auf Raumtemperatur werden diese gründlich gemahlen. Durch Sieben werden grobe Anteile (über 70 µm) abgetrennt. Die Applikation der Pulverlacke erfolgt üblicherweise durch elektrostatisches Pulversprühen.

Besonders geeignet sind die erfindungsgemäßen Produkte für den Einsatz in Bindemittelsystemen, welche basische Gruppen enthalten, speziell in solchen, welche durch Protonierung mit Säuren

wasserverdünnbar werden, insbesondere in Bindemittelsystemen für die kathodische Elektrotauchlackierung elektrisch leitfähiger Substrate, wie z.B. Metallteilen, Blechen usw. aus Messing, Kupfer, Aluminium, metallisierte Kunststoffe oder mit leitendem Kohlenstoff überzogenen Materialien, sowie Eisen und Stahl, die gegebenenfalls chemisch vorbehandelt, z.B. phosphatisiert, sind, zu verwenden. Dazu wird zur zumindest teilweisen Neutralisation eine Säure, wie z.B. Ameisensäure, Essigsäure, Phosphorsäure oder Milchsäure zugegeben. Die erfindungsgemäßen Harnstoffkondensationsprodukte eignen sich auch als Bindemittelkomponente für das EPC (=Electro Powder-Coating)-Verfahren.

Beispiele für derartige basische Gruppen enthaltende Bindemittel sind Umsetzungsprodukte von Epoxidharzen mit primären oder sekundären Aminen. Dabei bietet sich besonders die Umsetzung mit hydroxylgruppenhaltigen Aminen, wie z.B. Ethanolamin, Methylethanolamin und Diethanolamin an.

Werden solche Produkte eingesetzt, die ausreichende Mengen an Aminogruppen enthalten, um nach Protonierung mit Säuren wasserlöslich oder wasserdispergierbar zu werden, lassen sich in Kombination mit den erfindungsgemäßen Harnstoffkondensationsprodukten wasserdispergierbare Einbrennlackbindemittel herstellen, insbesondere solche, die für die kathodische Elektrotauchlackierung verwendet werden können. Für diesen Zweck können die oben erwähnten Umsetzungsprodukte von Epoxidhärzen mit primären oder sekundären Aminen eingesetzt werden.

Viele der für die kathodische Elektrotauchlackierung vorgeschlagenen Trägerharze sind auch in Kombination mit den erfindungsgemäßen Harnstoffkondensationsprodukten einsetzbar, so z.B. die Umsetzungsprodukte phenolischer Mannichbasen mit Epoxidharzen gemäß der DE—PS 24 19 179, die Umsetzungsprodukte von kettenverlängerten Epoxidharzen mit sekundären Aminen gemäß der US—PS—4 104 140, Umsetzungsprodukte von (Meth)-acrylamidomethylierten Phenolen, Aminen und Epoxidharzen, z.B. gemäß DE—OS—29 42 488 und DE—OS—30 21 300.

Es ist häufig vorteilhaft, Produkte einzusetzen, die primäre und/oder sekundäre Aminogruppen enthalten, da sich damit wäßrige Elektrotauchlackbäder mit hohen pH-Werten von z.B. 6,5 bis 8,0 herstellen lassen. Durch hohe pH-Werte, vor allem solche nahe pH 7 oder darüber, läßt sich eine Korrosion von Anlagen vermeiden. Eine Möglichkeit, zu geeigneten Produkten mit primären und sekundären Aminogruppen zu kommen, ist die Umsetzung von überschüssigen primären Diaminen mit Epoxidharzen und anschließende Abtrennung des überschüssigen Amins bei erhöhter Temperatur und vermindertem Druck.

Als Diamine kommen dafür vor allem solche mit 2 bis 6 Kohlenstoffatomen in Betracht, z.B. Ethylendiamin, 1,2- und 1,3-Diaminopropan, 1,4-Diaminobutan und Hexamethylendiamin. Die Reaktionsprodukte können, falls gewünscht, mit Dicarbonsäuren kettenverlängert werden, z.B. mit Sebazinsäure oder mit dimerer Fettsäure. Durch das Verhältnis Dicarbonsäure zu Epoxidharz-Aminaddukt kann man das gewünschte Molekulargewicht einstellen, z.B. kann man auf zwei Moleküle Epoxidharz-Aminaddukt 1 Mol dimerer Fettsäure einsetzen.

Eine weitere Möglichkeit, geeignete Produkte mit primären Aminogruppen herzustellen, ist der Umsatz von Epoxidharzen mit sekundären Aminen, die geblockte primäre Aminogruppen enthalten. Beispiele für solche Amine sind das Diketimin von Diethylentriamin, das Ketimin von Aminoethylethanolamin und das Ketimin von N-Methyl-ethylendiamin. Die Ketimine lassen sich in einfacher Weise aus den freien Aminen und einem Keton, z.B. Methylisobutylketon, unter Auskreisen von Wasser herstellen. Bei der Umsetzung mit Epoxidharzen reagiert nur die sekundäre Aminogruppe; anschließend kann das Ketimin durch Zugabe von Wasser gespalten werden, wobei sich die freie primäre Aminogruppe zurückbildet. Durch Umsetzung eines Teils der primären Aminogruppen mit Dicarbonsäuren lassen sich auch diese Produkte durch kettenverlängerung elastifizieren.

Die Mengen, in denen die erfindungsgemäßen Harnstoffkondensationsprodukte als Lackbindemittelkomponente zum Einsatz kommen können, betragen, sofern sie in Kombination mit einem anderen selbstvernetzenden Lackbindemittel verwendet werden, etwa 2 bis 50, vorzugsweise 10 bis 40 Gew.%, bezogen auf Gesamtbindemittel; sollen sie in Kombination mit einem nicht selbstvernetzenden Lackbindemittel als alleiniger Vernetzer dienen, sind Mengen von etwa 10 bis 60, vorzugsweise 20 bis 40 Gew%, bezogen auf Gesamtbindemittel, anzuwenden.

Die folgenden Beispiele sollen die Erfindung erläutern, ohne sie zu beschränken. Die angegebenen Teile und Prozente sind, soweit nicht anders angegeben, Gewichtsteile und Gewichtsprozente.

### Beispiel 1

67 Teile Trimethylolpropan, 550,8 Teile Harnstoff und 2322 Teile Di-n-butylamin werden vorgelegt. In der Kälte wird mit Stickstoff ein Innendruck von 4 bar eingestellt und dann unter Rühren auf 140°C erhitzt. Hierbei wird der Innendruck so geregelt, daß stets ein konstanter Druck von 4 bar erhalten bleibt. Nach ca. 0,5 Stunden bei 140°C wird die Innentemperatur auf 160°C erhöht. Unter Beibehaltung des Druckes von 4 bar werden 522 Teile Hexamethylendiamin innerhalb von ca. 1 Stunde zugesetzt. Danach wird die Temperatur stufenweise bis auf 210°C angehoben und noch ca. 7 Stunden unter dem Druck von 4 bar bei dieser Temperatur gerührt. Danach wird entspannt, die Temperatur auf ca. 175°C gesenkt und unter Vakuum überschüssiges Di-n-butylamin abdestilliert. Dann werden bei einer Temperatur von ca. 160°C 149,2 Teile Triethanolamin zugesetzt und weiteres Di-n-butylamin im Vakuum abdestilliert, bis eine Amin-Zahl von ca. 5 erreicht ist. Nach dem Abkühlen auf 120°C wird mit Methylisobutylketon soweit verdünnt, daß eine gelbliche, harzartige Flüssigkeit mit einem Feststoffgehalt von 80% entsteht.

Beispiel 2

Analog Beispiel 1 werden 134 Teile Trimethylolpropan, 112,7 Teile Triethylenglykol, 550,8 Teile Harnstoff sowie 2322 Teile Di-n-butylamin vorgelegt. In der Kälte wird mit Stickstoff ein Innendruck von 4 bar eingestellt und unter Rühren auf 140°C erhitzt. Hierbei wurde der Innendruck so geregelt, daß stets ein konstanter Druck von 4 bar aufrecht erhalten bleibt. Nach ca. 0,5 Stunden bei 140°C wird die Temperatur auf 160 bis 170°C gesteigert und 522 Teile Hexamethylendiamin unter Beibehaltung des Druckes von 4 bar innerhalb von ca. 1 Stunde zugesetzt. Danach wird die Temperatur auf 200°C gesteigert und das Reaktionsgemisch bei dieser Temperatur 8 Stunden lang gerührt. Danach wird entspannt, die Temperatur auf 175°C abgesenkt und unter Vakuum überschüssiges Di-n-butylamin abdestilliert. Nach weiterem Abkühlen auf ca. 100°C wird mit Methylisobutylketon ein Feststoffgehalt von ca. 80% eingestellt.

Vergleichsbeispiel 1

522 Teile Hexamethylendiamin, 201 Teile Trimethylolpropan, 550,8 Teile Harnstoff und 2322 Teile Di-n-butylamin werden innerhalb von 2 Stunden auf 160°C erhitzt. Dabei spaltet sich ab etwa 130°C Ammoniak ab. Die Reaktionsmischung wird zuerst flüssig und würde zu einer weißen Kristallmasse erstarren, wenn man nicht die Temperatur auf ca. 180°C erhöhen würde. Bei 180°C wird wieder eine klare Schmelze erhalten, dabei wirkt das überschüssig eingesetzte Di-n-butylamin als Lösemittel und Reaktant. Nach ca. 8 Stunden Reaktionszeit, wobei die Temperatur weiter auf 215°C gesteigert worden war, wurde auf 190°C abgekühlt und überschüssiges Di-n-butylamin im Vakuum abgezogen. Nach dem Abkühlen auf 130°C wird mit Methylisobutylketon soweit verdünnt, daß eine farblose, viskose Flüssigkeit mit einem Feststoffgehalt von 80% entsteht.

Vergleichsbeispiel 2

67 Teile Trimethylolpropan, 550,8 Teile Harnstoff und 2322 Teile Di-n-butylamin werden vorgelegt. Mit Stickstoff wird ein Innendruck von 4 bar eingestellt und die Temperatur unter Rühren auf 140°C erhöht. Der Innendruck von 4 bar wird konstant gehalten. Nach ca. 0,5 Stunden wird die Innentemperatur auf 165°C gesteigert und 522 Teile Hexamethylendiamin innerhalb von 1 Stunde mit Stickstoff in den Kessel gedrückt. Nach Zulaufende wird auf 210°C aufgeheizt, wobei auch weiterhin der Innendruck von 4 bar aufrechterhalten wird. Nach insgesamt 8 Stunden Reaktionszeit wird auf ca. 190°C abgekühlt, entspannt und überschüssiges Di-n-butylamin abdestilliert. Anschließend wird auf 100°C abgekühlt und mit Methylisobutylketon so verdünnt, daß eine farblose bis leicht gelbliche Flüssigkeit mit einem Feststoffgehalt von 80% entsteht.

Anwendungsbeispiele

Beispiel 3

Zunächst wird ein nicht selbstvernetzendes, kathodisch abscheidbares Bindemittel hergestellt. Dazu werden 200 Teile des Epoxid-Aminadduktes, hergestellt durch Umsetzung von handelsüblichem Epoxidharz auf Basis von 2,2-Bis-(4-hydroxyphenyl)-propan mit einem Epoxid-Äquivalentgewicht von 500 und einem 5-molaren Überschuß Hexamethylendiamin, der nach beendeter Umsetzung unter Vakuum herausdestilliert wurde, 30 Teile dimerisierte Fettsäure und 20 Teile Xylol allmählich unter Auskreisen von Wasser auf 190°C erhitzt und eine Stunde bei dieser Temperatur gehalten. Nach dem Abkühlen auf 130°C wird zunächst mit 9 Teilen Butylglykol und danach mit 70 Teilen Isobutanol verdünnt. Das Produkt hat einen Feststoffgehalt von 70%.

Zu 100 Teilen dieser Lösung werden 42,8 Teile der Harnstoffkondensationsprodukte aus Beispiel 1 und 2 sowie der Vergleichsbeispiele 1 und 2 gegeben und mit jeweils 2,4 Teilen Essigsäure vermischt.

Zur Prüfung als kathodische Elektrotauchlacke werden durch Zugabe von vollentsaltem Wasser aus den mit Säure versetzten Bindemitteln 10% ige Dispersionen hergestellt. Unter Rühren wird zu jeweils 1000 Teilen der jeweiligen Bindemitteldispersion 66 Teile einer Pigmentpaste zugesetzt, welche folgendermaßen hergestellt worden ist:

Pigmentpaste

Nach Beispiel 1a) der DE—OS—31 21 765 wird ein Pastenbindemittel hergestellt. Dazu werden in einem Reaktionsgefäß 200 Teile Ethylenglykolmonobutylether auf 90°C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Abschließend wird 1 Stunde lang bei 90°C nachpolymerisiert. Das resultierende Lösungspolymerisat hat einen K-Wert nach Fikentscher von 24. Der Festkörpergehalt der Copolymerisatlösung berträgt 76%.

In einer Rührwerksmühle werden 250 Teile dieser Copolymerisatlösung, 210 Teile Ethylenglykolmonobutylether, 555 Teile Ethylenglykolmonoethylether, 837 Teile vollentsalztes Wasser, 1084 Teile Kaolin, 217 Teile basisches Bleisilikat, 145 Teile Ruß, 36 Teile Rutil und 3000 Teile Glasperlen von einem Durchmesser von 2 mm 45 Minuten bei einer Drehzahl von 1000 Umdrehungen/Minute gerührt. Nach dem Abtrennen der Glasperlen wird eine Schwarzpaste mit einem Festgehalt von 50,6% erhalten.

Die auf diese Weise hergestellten Elektrotauchbäder werden 48 Stunden bei 30°C gerührt. An kathodisch geschalteten, zinkphosphatierten Prüftafeln aus Stahl werden Lackfilme innerhalb von 2 Minuten bei der in der Tabelle angegebenen Spannung abgeschieden und 20 Minuten bei 180°C, bei 160°C und bei 140°C eingebrannt. Anschließend wird die Beständigkeit gegen Aceton durch 50 maliges Hin- und Herreiben mit einem acetongetränkten Wattebausch und die Elastizität in Form der Schlagtiefung geprüft. Die folgende Tabelle zeigt die Ergebnisse:

Ergebnisse der Bindemittelprüfung

| | pH | Abscheide-spannung | Badtem-peratur | Schicht-dicke | Umgriff nach Ford | Acetonfestigkeit bei Einbrenntemp. | Schlagtiefung in x lb | Salzsprühtest ASTM, Unter-wanderung am Ritz | |
|---|---|---|---|---|---|---|---|---|---|
| Beispiel 1 | 8,0 | 300 V | 27°C | 32 µm | 22 cm | 1 (160°C) | 160 | 500 h | 0,2 |
| | | | | | | 2 (140°C) | 100 | 500 h | 0,4 |
| Beispiel 2 | 7,9 | 300 V | 27°C | 29 µm | 21,0 cm | 1 (160°C) | 140 | 500 h | 0,3 |
| | | | | | | 2 (140°C) | 100 | 500 h | 0,5 |
| Vgl.bsp. 1 | 7,9 | 300 V | 27°C | 17 µm | 20 cm | 1 (160°C) | 140 | 500 h | 0,2 |
| | | | | | | 2 (140°C) | 80 | 500 h | 0,3 |
| Vgl.bsp. 2 | 8,1 | 300 V | 27°C | 19 µm | 21,5 cm | 1 (160°C) | 160 | 500 h | 0,3 |
| | | | | | | 3 (140°C) | 20 | 500 h | 0,7 |

**Patentansprüche**

1. Verfahren zur Herstellung von Harnstoffkondensationsprodukten, dadurch gekennzeichnet, daß man
(A) mindestens ein primäres Di- und/oder Polyamin mit
(B) Harnstoff,
(C) mindestens einem sekundären Monoamin und
(D) einem oder mehreren Polyalkoholen, die mindestens zwei primäre oder sekundäre Hydroxylgruppen sowie zusätzlich mindestens eine Ether- oder Thioethergruppe oder eine tertiäre Aminogruppe

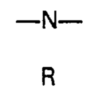

oder die Gruppierung

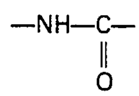

enthalten, wobei R für einen Alkylrest mit 1 bis 12 Kohlenstoffatomen, einen Cycloalkyl- oder, gegebenenfalls substituierten, Phenylrest mit 6 bis 20 Kohlenstoffatomen, einen Hydroxyalkylrest mit 2 bis 12 Kohlenstoffatomen oder einen Hydroxyalkylrest, wie er durch Addition einer Epoxidverbindung an ein sekundäres Amin erhalten wird, steht, und (D) gegebenenfalls teilweise ersetzt sein kann durch
(E) einen oder mehrere von (D) verschiedene Polyalkohole, die mindestens zwei primäre oder sekundäre Hydroxylgruppen enthalten,
bei erhöhter Temperatur, gegebenenfalls in Gegenwart von Katalysatoren, umsetzt und den entstehenden Ammoniak abtrennt.

2. Verfahren nach Anspruch 1, dadurch gekennzeichnet, daß das Äquivalenzverhältnis von $NH_2$-Gruppen der primären Di- und/oder Polyamine (A) zu $NH_2$-Gruppen des Harnstoffs (B) zu NH-Gruppen des sekundären Monoamins (C) zu OH-Gruppen der Polyalkohole (D) und (E) 1:1,2 bis 2,4:0,2 bis 20:0,1 bis 0,9:0 bis 0,5 beträgt.

3. Verfahren nach Anspruch 1 oder 2, dadurch gekennzeichnet, daß man als primäres Di- und/oder Polyamin ein aliphatisches primäres Di- und/oder Polyamin, dessen primäre Aminogruppen durch mehr als 3 Kohlenstoffatome voneinander getrennt sind, oder ein cycloaliphatisches oder aromatisches Polyamin, dessen primäre Aminogruppen durch mindestens 3 Kohlenstoffatome voneinander getrennt sind, verwendet wird.

4. Verfahren nach einem der Ansprüche 1 bis 3, dadurch gekennzeichnet, daß als Komponente (D) ein Polyalkohol mit einem Molekulargewicht von 106 bis 5000 und 2 bis 10 Hydroxylgruppen verwendet wird.

5. Verfahren nach einem der Ansprüche 1 bis 4, dadurch gekennzeichnet, daß ein Überschuß an sekundärem Monoamin eingesetzt und am Ende der Reaktion unter vermindertem Druck abdestilliert wird.

6. Verfahren nach einem der Ansprüche 1 bis 5, dadurch gekennzeichnet, daß die Gesamtmenge des primären Di- und/oder Polyamins (A) zusammen mit den Komponenten (B), (C), (D) und gegebenenfalls (E) umgesetzt wird.

7. Verfahren nach einem der Ansprüche 1 bis 5, dadurch gekennzeichnet, daß die Komponente (A) vollständig oder teilweise dem Reaktionsgemisch der Komponenten (B), (C), (D) und gegebenenfalls (E) im Laufe der Reaktion zugegeben wird.

8. Verfahren nach einem der Ansprüche 1 bis 5, dadurch gekennzeichnet, daß die Komponente (A) vollständig oder teilweise dem Reaktionsgemisch der Komponenten (B), (C) und (E) im Laufe der Reaktion zugegeben wird und die Komponente (D) erst nach beendigter Zugabe von (A) zugesetzt wird.

9. Verfahren nach einem der vorhergehenden Ansprüche, dadurch gekennzeichnet, daß die Umsetzung unter einem Druck von 0,1 bis 20 bar durchgeführt wird.

10. Verfahren nach einem der vorhergehenden Ansprüche, dadurch gekennzeichnet, daß die Reaktion bei einer Temperatur von 120 bis 230°C durchgeführt wird.

11. Verfahren nach einem der vorhergehenden Ansprüche, dadurch gekennzeichnet, daß als Komponente (C) ein sekundäres Amin mit einem Siedepunkt zwischen 100 und 200°C eingesetzt wird.

12. Verfahren nach einem der vorhergehenden Ansprüche, dadurch gekennzeichnet, daß als sekundäres Amin Di-n-butylamin eingesetzt wird.

13. Harnstoffkondensationsprodukte, erhältlich nach einem Verfahren gemäß einem der Ansprüche 1 bis 12.

14. Verwendung der nach einem Verfahren gemäß einem der Ansprüche 1 bis 12 hergestellten Harnstoffkondensationsprodukte als Bindemittelkomponenente in hitzehärtbaren Lacken.

15. Verwendung der nach einem Verfahren gemäß einem der Ansprüche 1 bis 12 hergestellten Harnstoffkondensationsprodukte als Bindemittelkomponenente in hitzehärtbaren, kathodisch abscheidbaren Elektrotauchlacken.

16. Verwendung der nach einem Verfahren gemäß einem der Ansprüche 1 bis 12 hergestellten Harnstoffkondensationsprodukte als Bindemittelkomponenente für die Pulverlackierung.

17. Bindemittel für hitzehärtbare Lacke, dadurch gekennzeichnet, daß sie aus 50 bis 98 Gew.% eines üblichen selbstvernetzenden Lackbindemittels und 2 bis 50 Gew.% eines nach einem Verfahren gemäß einem der Ansprüche 1 bis 12 hergestellten Harnstoffkondensationsproduktes bestehen.

18. Bindemittel für hitzehärtbare Lacke, dadurch gekennzeichnet, daß sie aus 40 bis 90% eines üblichen nicht selbstvernetzenden Lackbindemittels und 10 bis 60 Gew.% eines nach einem Verfahren gemäß einem der Ansprüche 1 bis 12 hergestellten Harnstoffkondensationsproduktes bestehen.

**Revendications**

1. Procédé de préparation de produits de condensation de l'urée, caractérisé en ce que l'on fait réagir
(A) au moins une di- et/ou polyamine primaire, avec
(B) de l'urée,
(C) au moins une monoamine secondaire et
(D) un ou plusieurs polyalcools qui contiennent au moins deux radicaux hydroxyle primaires ou secondaires, comme complémentairement aussi au moins un radical éther ou thioéther, ou un radical amino tertiaire

—N—,
|
R

ou le groupement

—NH—C—,
‖
O

où R représente un radical alkyle comportant de 1 à 12 atomes de carbone, un radical cycloalkyle, ou un radical phényle éventuellement substitué, comportant de 6 à 20 atomes de carbone, un radical hydroxyalkyle comportant de 2 à 12 atomes de carbone ou un radical hydroxyalkyle tel qu'on l'obtient par addition d'un composé du type époxyde sur une amine secondaire et (D) peut éventuellement être partiellement remplacé par
(E) un ou plusieurs polyalcools qui diffèrent de (D) et qui contiennent au moins deux radicaux hydroxyle primaires ou secondaires,
à température élevée, éventuellement en présence de catalyseurs et on sépare l'ammoniac qui se forme.

2. Procédé suivant la revendication 1, caractérisé en ce que le rapport d'équivalence de radicaux $NH_2$ des di- et/ou polyamines primaires (A) aux groupes $NH_2$ de l'urée (B) aux groupes NH de la monoamine secondaire (C) aux radicaux OH des polyalcools (D) et (E) varie de 1:1,2 à 2,4:0,2 à 20:0,1 à 0,9:0 à 0,5.

3. Procédé suivant la revendication 1 ou 2, caractérisé en ce que l'on utilise, à titre de di- et/ou polyamine primaire, une di- et/ou polyamine primaire aliphatique, dont les radicaux amino primaires sont séparés les uns des autres par plus de 3 atomes de carbone, ou une polyamine cycloaliphatique ou aromatique, dont les radicaux amino primaires sont séparés les uns des autres par au moins 3 atomes de carbone.

4. Procédé suivant l'une des revendications 1 à 3, caractérisé en ce que l'on utilise, à titre de composant (D), un polyalcool qui possède un poids moléculaire de 106 à 5000 et qui comporte de 2 à 10 radicaux hydroxyle.

5. Procédé selon l'une des revendications 1 à 4, caractérisé en ce que l'on utilise un excès de monoamine secondaire et en ce qu'on l'élimine à la fin de la réaction par distillation sous pression réduite.

6. Procédé suivant l'une des revendications 1 à 5, caractérisé en ce que l'on fait réagir la quantité totale de la di- et/ou polyamine primaire (A) en même temps que les composants (B), (C), (D) et éventuellement (E).

7. Procédé suivant l'une des revendications 1 à 5, caractérisé en ce que l'on ajoute le composant (A) en totalité ou en partie au mélange réactionnel des composants (B), (C), (D) et éventuellement (E), au cours du déroulement de la réaction.

8. Procédé suivant l'une des revendications 1 à 5, caractérisé en ce que l'on ajoute le composant (A) en totalité ou en partie au mélange réactionnel des composants (B), (C) et (E) au cours du déroulement de la réaction et on n'ajoute seulement le composant (D) qu'après addition achevée de (A).

9. Procédé selon l'une des revendications précédentes, caractérisé en ce que l'on réalise la réaction sous une pression de 0,1 à 20 bars.

10. Procédé selon l'une des revendications précédentes, caractérisé en ce que l'on réalise la réaction à une tempèrature de 220 à 230°C.

11. Procédé selon l'une des revendications précédentes, caractérisé en ce que l'on utilise, à titre de composant (C), une amine secondaire qui possède un point d'ébullition compris entre 100 et 200°C.

12. Procédé selon l'une des revendications précédentes, caractérisé en ce que l'on utilise la di-n-butylamine à titre d'amine secondaire.

13. Produits de condensation de l'urée, obtenus par mise en oeuvre du procédé selon l'une des revendications 1 à 12.

14. Utilisation des produits de condensation de l'urée obtenus par mise en oeuvre du procédé selon l'une des revendications 1 à 12, à titre de composants du type liant dans des laques ou vernis thermodurcissables.

15. Utilisation des produits de condensation de l'urée obtenus par mise en oeuvre du procédé selon l'une des revendications 1 à 12, à titre de composants du type liant dans des laques ou vernis que l'on destine à l'application cathodique par trempage électrophorétique, thermodurcissables.

16. Utilisation des produits de condensation obtenus par mise en oeuvre du procédé selon l'une des revendications 1 à 12, à titre de composants du type liant pour le laquage ou le vernissage à poudres.

17. Liants pour des laques ou vernis thermodurcissables, caractérisés en ce qu'ils se composent de 50 à 98% en poids d'un liant pour laque ou vernis autoréticulant usuel et de 2 à 50% en poids de produits de condensation obtenue par mise en oeuvre du procédé selon l'une des revendications 1 à 12.

18. Liants pour des laques ou vernis thermodurcissables, caractérisés en ce qu'ils se composent de 40 à 90% en poids d'un liant pour laque ou vernis non autoréticulant usuel et de 10 à 60% en poids de produits de condensation obtenus par la mise en oeuvre du procédé selon l'une des revendications 1 à 12.

## Claims

1. A process for the preparation of a urea condensate, wherein,

(A) one or more primary di- and/or polyamines are reacted with

(B) urea,

(C) one or more secondary monoamines and

(D) one or more polyalcohols which contain two or more primary or secondary hydroxyl groups and in addition one or more ether or thioether groups or a tertiary amino group

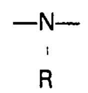

or the group

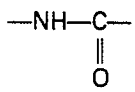

where R is alkyl of 1 to 12 carbon atoms, cycloalkyl, unsubstituted or substituted phenyl of 6 to 20 carbon atoms, hydroxylalkyl or 2 to 12 carbon atoms or a hydroxyalkyl radical as obtained by an addition reaction of an epoxide compound with a secondary amine, and (D) may be partially replaced with

(E) one or more polyalcohols which differ from (D) and contain two or more primary or secondary hydroxyl groups,

at elevated temperatures and in the presence or absence of a catalyst, and the ammonia formed is separated off.

2. A process as claimed in claim 1, wherein the ratio of the number of equivalents of $NH_2$ groups of the primary di- and/or polyamines (A) to the number of equivalents of $NH_2$ groups of the urea (B) to the number of equivalents of NH groups of the secondary monoamine (C) to the number of equivalents of OH groups of the polyalcohols (D) and (E) is 1:1.2—2.4:0.2—20:0.1—0.9:0—0.5.

3. A process as claimed in claim 1 or 2, wherein an aliphatic primary di- and/or polyamine whose primary amino groups are separated from one another by more than 3 carbon atoms, or a cycloaliphatic or aromatic polyamine whose primary amino groups are separated from one another by 3 or more carbon atoms, is used as the primary di- and/or polyamine.

4. A process as claimed in claim 1 or 2 or 3, wherein a polyalcohol having a molecular weight of from 106 to 5000 and containing from 2 to 10 hydroxyl groups is used as component (D).

5. A process as claimed in claim 1 or 2 or 3 or 4, wherein an excess of a secondary monoamine is employed, and is distilled off under reduced pressure at the end of the reaction.

6. A process as claimed in claim 1 or 2 or 3 or 4 or 5, wherein the total amount of the primary di- and/or polyamine (A) is reacted with the components (B), (C), (D) and, where relevant, (E).

7. A process as claimed in claim 1 or 2 or 3 or 4 or 5, wherein some or all of component (A) is added, in the course of the reaction, to the reaction mixture consisting of components (B), (C), (D) and, where relevant, (E).

8. A process as claimed in claim 1 or 2 or 3 or 4 or 5, wherein some or all of component (A) is added, in the course of the reaction, to the reaction mixture consisting of components (B), (C) and (E), and component (D) is only added when the addition of (A) is complete.

9. A process as claimed in one of the preceding claims, wherein the reaction is carried out under a pressure of from 0.1 to 20 bar.

10. A process as claimed in one of the preceding claims, wherein the reaction is carried out at a temperature of from 120 to 230°C.

11. A process as claimed in one of the preceding claims, wherein a secondary amine having a boiling

point of from 100 to 200°C is used as component (C).

12. A process as claimed in one of the preceding claims, wherein di-n-butylamine is used as the secondary amine.

13. A urea condensate obtainable by a process as claimed in claim 1 or 2 or 3 or 4 or 5 or 6 or 7 or 8 or 9 or 10 or 11 or 12.

14. Use of the urea condensate prepared by a process as claimed in claim 1 or 2 or 3 or 4 or 5 or 6 or 7 or 8 or 9 or 10 or 11 or 12 as a binder component in heat-curable surface coatings.

15. Use of the urea condensate prepared by a process as claimed in claim 1 or 2 or 3 or 4 or 5 or 6 or 7 or 8 or 9 or 10 or 11 or 12 as a binder component in heat-curable cathodic electrocoating finishes.

16. Use of the urea condensate prepared by a process as claimed in claim 1 or 2 or 3 or 4 or 5 or 6 or 7 or 8 or 9 or 10 or 11 or 12 as a binder component for powder coating.

17. A binder for heat-curable surface coatings, which consists of from 50 to 98% by weight of a conventional self-crosslinking surface coating binder and from 2 to 50% by weight of a urea condensate prepared by a process as claimed in claim 1 or 2 or 3 or 4 or 5 or 6 or 7 or 8 or 9 or 10 or 11 or 12.

18. A binder for heat-curable surface coatings, which consists of from 40 to 90% by weight of a conventional non-self-crosslinking surface coating binder and from 10 to 60% by weight of a urea condensate prepared by a process as claimed in claim 1 or 2 or 3 or 4 or 5 or 6 or 7 or 8 or 9 or 10 or 11 or 12.